(19) Europäisches Patentamt
European Patent Office
Office européen des brevets

(11) **EP 2 221 656 A1**

## (12) EUROPEAN PATENT APPLICATION

(43) Date of publication:
**25.08.2010 Bulletin 2010/34**

(21) Application number: **10150250.8**

(22) Date of filing: **07.01.2010**

(51) Int Cl.:
*G02B 27/64* (2006.01)     *H04N 5/232* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **20.02.2009 JP 2009037403**

(71) Applicant: **Fujinon Corporation**
**Saitama (JP)**

(72) Inventor: **Sasaki, Tadashi**
**Saitama-shi, Saitama (JP)**

(74) Representative: **Klunker . Schmitt-Nilson . Hirsch**
**Patentanwälte**
**Destouchesstrasse 68**
**80796 München (DE)**

(54) **Shake detecting sensor and image blur correcting device**

(57)     A shake detecting sensor includes: a plurality of shake detecting sensors that detects a shake; and an adder circuit that adds shake signals output from the plurality of shake detecting sensors. A signal added by the adder circuit is output as a shake signal output from one sensor.

## FIG. 2

EP 2 221 656 A1

**Description**

BACKGROUND

1. Technical Field

The present invention relates to a shake detecting sensor and an image blur correcting device, and more particularly, to a shake detecting sensor capable of improving the S/N ratio (signal-to-noise ratio) of an output signal (shake signal) and an image blur correcting device.

2. Related Art

An image blur correcting device for a television camera has been proposed in which an anti-shake lens is provided in an imaging optical system so as to be movable in the plane orthogonal to an optical axis, and when a shake occurs in the camera (the imaging optical system of the camera), the anti-shake lens is driven by an actuator such that image blur caused by the shake is removed, thereby correcting the image blur (for example, see Patent Document 1 (JP-A-2001-142103 corresponding to U.S. Patent 7,339,612) and Patent Document 2 (JP-A-2003-107554)). In addition to the method of using the anti-shake lens that is moved in the plane orthogonal to the optical axis, other image blur correcting methods have been proposed. In the image blur correcting methods, an image displacement unit optically or electronically displaces the position of the image formed by the optical system on an image surface in the horizontal direction or the vertical direction and the amount of displacement of the image by the image displacement unit is controlled such that image blur is removed. In this way, the image blur is corrected.

In addition, a shake detecting sensor, such as a gyro sensor, is provided in the camera and a camera shake is detected by a shake signal output from the shake detecting sensor.

However, the voltage of the shake detecting sensor is not constant and noise is generated from the shake detecting sensor even in a stationary state in which no shake occurs. It is difficult to discriminate the noise from the shake signal output from the shake detecting sensor when a shake occurs actually. Therefore, the noise generated from the shake detecting sensor is also processed as the shake signal generated due to a shake, and an image blur correcting process is also performed on the noise. As a result, a 'fluctuation phenomenon' occurs in which, even though no shake occurs, image blur occurs.

SUMMARY

The invention has been made in order to solve the above-mentioned problems, and an object of the invention is to provide a shake detecting sensor capable of improving the S/N ratio of an output shake signal and appropriately preventing a fluctuation phenomenon by correcting image blur caused by noise when it is used in an image blur correcting device, and an image blur correcting device.

[1] According to an aspect of the invention, a shake detecting sensor includes: a plurality of shake detecting sensors that detects a shake; and an adder circuit that adds shake signals output from the plurality of shake detecting sensors. A signal added by the adder circuit is output as a shake signal output from one sensor.
[2] According to the shake detecting sensor of [1], the plurality of shake detecting sensors, or the plurality of shake detecting sensors and the adder circuit may be incorporated into one package.
[3] According to the shake detecting sensor of [1] or [2], each of the plurality of shake detecting sensors may be a gyro sensor.
[4] According to another aspect of the invention, an image blur correcting device includes: a shake detecting sensor that outputs a shake signal corresponding to a shake which occurs in an optical system; an image displacement unit that displaces an image formed by the optical system on an imaging surface; and an image blur correcting unit that removes image blur caused by the shake occurring in the optical system using the image displacement unit, on the basis of the shake signal. The shake detecting sensor includes: a plurality of shake detecting sensors that detects the shake; and an adder circuit that adds shake signals output from the plurality of shake detecting sensors. A signal added by the adder circuit is output as a shake signal output from one sensor.
[5] According to the image blur correcting device of [4], the plurality of shake detecting sensors, or the plurality of shake detecting sensors and the adder circuit may be incorporated into one package.
[6] According to the image blur correcting device of [4] or [5], each of the plurality of shake detecting sensors may be a gyro sensor.

With the configuration of [1] to [6], it is possible to improve the S/N ratio of the shake signal output from the shake detecting sensor. When the shake detecting sensor is used in an image blur correcting device, it is possible to appropriately prevent a fluctuation phenomenon by correcting image blur caused by noise.

BRIEF DESCRIPTION OF THE DRAWINGS

Fig. 1 is a diagram illustrating the basic structure of an image blur correcting device.

Fig. 2 is a diagram illustrating the structure of an image blur correcting device according to an embodiment of the invention.

Fig. 3 is a diagram illustrating the S/N ratio of a signal output from a shake detecting sensor shown in Fig. 1.

Fig. 4 is a diagram illustrating the S/N ratio of a signal output from a shake detecting sensor shown in Fig. 2.

Fig. 5 is a diagram illustrating the internal circuit structure of the shake detecting sensor according to the embodiment of the invention.

DETAILED DESCRIPTION

Hereinafter, a lens device including an anti-shake shift lens according to an exemplary embodiment of the invention will be described in detail with reference to the accompanying drawings.

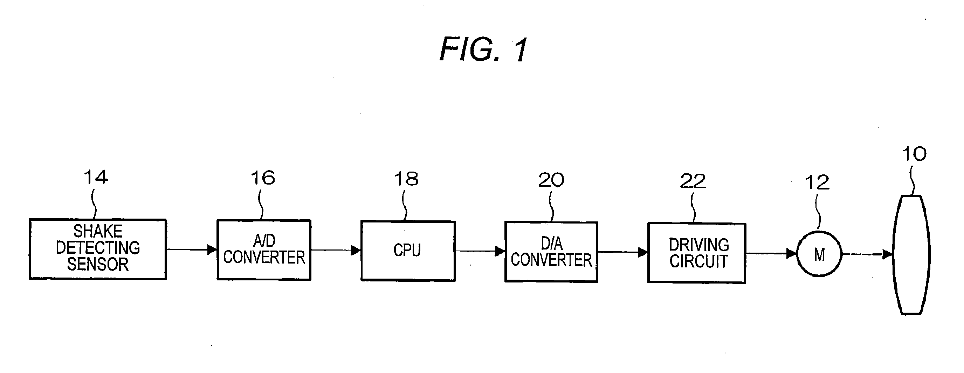

Fig. 1 is a diagram illustrating the basic structure of an image blur correcting device. The image blur correcting device is provided in, for example, a lens device (imaging lens) for a television camera, a movie camera, or a still camera. An anti-shake lens 10 shown in Fig. 1 is provided in an imaging optical system of a lens device or a camera including the image blur correcting device so as to be movable in an up-down direction (vertical direction) and a left-right direction (horizontal direction) in the plane orthogonal to an optical axis. The anti-shake lens 10 is moved in the vertical direction and the horizontal direction by a motor 12. When a camera (imaging optical system) shake occurs, the anti-shake lens 10 is moved to a position where image blur is prevented (where the shake is removed) by the motor 12. The anti-shake lens 10 is configured such that it is driven by the same process as described above on the basis of a camera shake that occurs in the directions deviating from the vertical direction and the horizontal direction. Therefore, in this embodiment, the movement of the lens only in one of the vertical direction and the horizontal direction is described, and a shake direction and the movement direction of the anti-shake lens 10 with respect to the shake direction will not be described.

A shake detecting sensor 14 shown in Fig. 1 is for detecting a camera shake. For example, a gyro sensor (angular velocity sensor) is used as the shake detecting sensor. The shake detecting sensor 14 is provided on, for example, an upper surface of a lens barrel, detects a shake occurring in the lens barrel, and outputs an electric signal with a voltage corresponding to the detected shake. The signal output from the shake detecting sensor 14 is referred to as a shake signal. When a gyro sensor is used as the shake detecting sensor 14, a signal indicating an angular velocity (angular velocity signal) is output from the shake detecting sensor 14.

The shake signal output from the shake detecting sensor 14 is converted into a digital signal by an A/D converter 16. Then, the digital signal is transmitted to a CPU 18. The CPU 18 calculates position data indicating a target position to which the anti-shake lens 10 will be moved, on the basis of the shake signal acquired from the shake detecting sensor 14. For example, when a gyro sensor is used as the shake detecting sensor 14, an angular velocity signal is transmitted as the shake signal from the gyro sensor to the CPU 18. In this case, the CPU 18 performs, for example, an integration process on the acquired angular velocity signal to convert the angular velocity signal into a signal indicating an angle (angular signal) and calculates the position (position data indicating a target position) of the anti-shake lens 10 where image blur is corrected, on the basis of the angular signal.

As described above, the position data indicating the target position calculated by the CPU 18 is output as a position instruction signal to a D/A converter 20. The D/A converter 20 converts the position instruction signal into an analog voltage signal and outputs the position instruction signal to a driving circuit 22.

The driving circuit 22 drives the motor 12 to move the anti-shake lens 10 to the target position indicated by the position instruction signal. Then, the anti-shake lens 10 is moved to the target position calculated by the CPU 18 and image blur caused by a camera shake is corrected (prevented).

However, the voltage of the shake detecting sensor 14 is not constant and noise is generated from the shake detecting sensor 14 even in a stationary state in which no shake occurs. It is difficult to discriminate the noise from the shake signal output from the shake detecting sensor 14 when a shake occurs actually. Therefore, the noise generated from the shake detecting sensor 14 is also processed as the shake signal generated due to a shake, and an image blur correcting process is also performed on the noise. As a result, a 'fluctuation phenomenon' occurs in which, even though no shake occurs, image blur occurs.

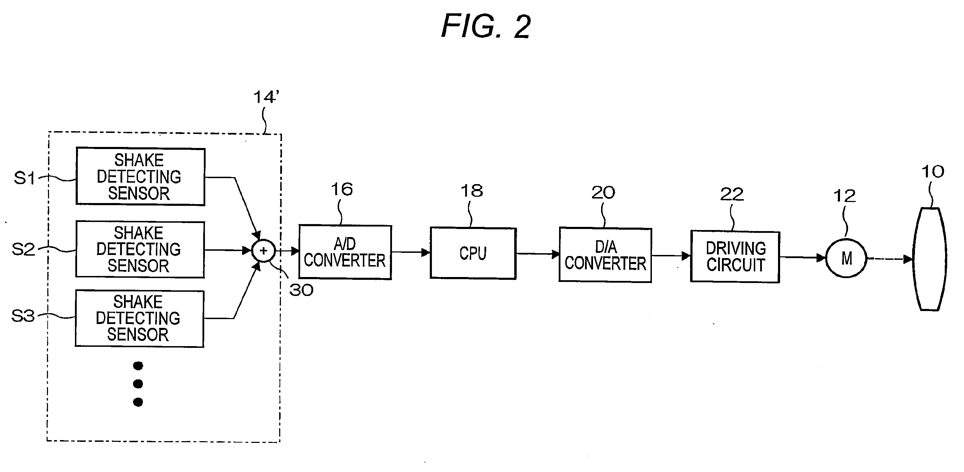

In order to solve the above-mentioned problem, as shown in Fig. 2, an image blur correcting device according to an embodiment of the invention includes a shake detecting unit 14' including a plurality of shake detecting sensors S1, S2, ..., SH (H indicating the number of shake detecting sensors S1, S2, ..., SH), instead of the shake detecting sensor 14 being one sensor shown in Fig. 1. In Fig. 2, the same components as those shown in Fig. 1 are denoted by the same reference numerals and a description thereof will be omitted.

In Fig. 2, the shake detecting unit 14' includes the plurality of shake detecting sensors S1, S2, ..., SH and an adder circuit 30. Each of the shake detecting sensors S1, S2, ..., SH is the same as the shake detecting sensor 14 shown in Fig. 1, and outputs a shake signal with a voltage corresponding to a shake. It is preferable that the shake detecting sensors S1, S2, ..., SH be the same type of sensor with the same characteristics. In this embodiment, the same type of sensor is used.

The shake signal output from each of the shake detecting sensors S1, S2, ..., SH is input to the adder circuit 30, and the adder circuit 30 adds the shake signals output from all the shake detecting sensors S1, S2, ..., SH. Then, the shake signal added by the adder circuit 30 is output as the output of one shake detecting unit 14' to the A/D converter 16. The process after the A/D converter 16 is the same as that shown in Fig. 1 and thus a description thereof will be omitted.

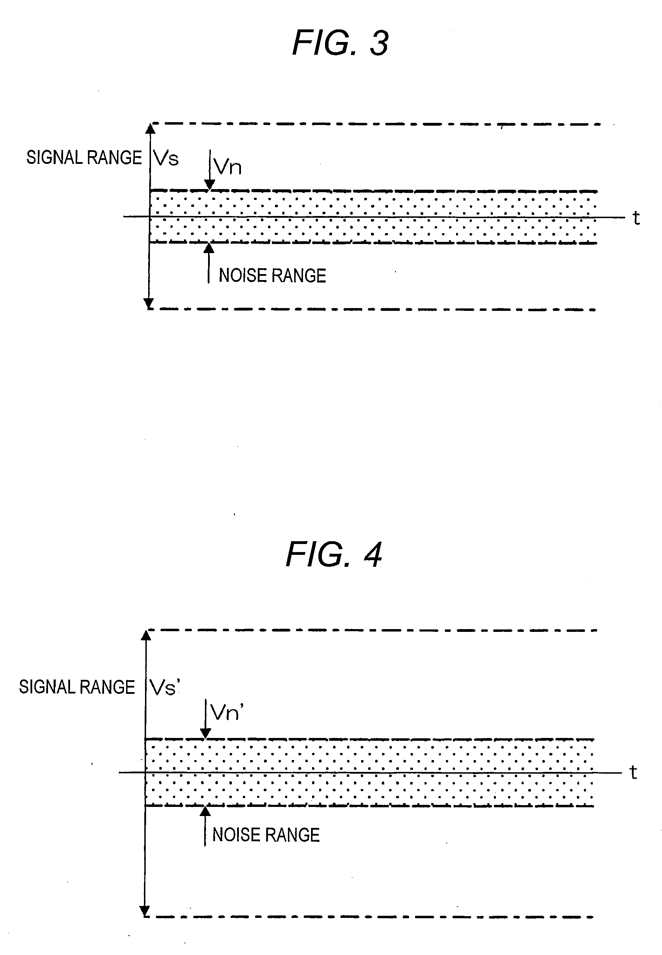

According to the above-mentioned structure, the shake signal that is output from the adder circuit 30 as the output of the shake detecting unit 14' has an S/N ratio higher than that of the shake signal that is output from the shake detecting sensor 14 including one sensor shown in Fig. 1. That is, in the shake detecting sensor 14 including one sensor shown in Fig. 1, if the signal range of the shake signal output from the shake detecting sensor 14 is Vs and the signal range of noise is Vn as shown in Fig. 3, the S/N ratio is Vs/Vn.

Meanwhile, if the sum of the outputs from the plurality of shake detecting sensors S1, S2, ..., SH is used as the output of one shake detecting unit 14' as shown in Fig. 2 and it is assumed that each of the shake detecting sensors S1, S2, ..., SH has the same characteristics as the shake detecting sensor 14 shown in Fig. 1, the signal range Vs' of the shake signal output from the shake detecting unit 14' shown in Fig. 2 is represented by the following Expression 1.

[Expression 1]

$$Vs' = \sum_{1}^{H} Vs = H \times Vs$$

Where, H indicates the number of shake detecting sensors S1, S2, ..., SH.

The signal range Vn' of the noise output from the shake detecting unit 14' shown in Fig. 2 is represented by the following Expression 2.

[Expression 2]

$$Vn' = \sqrt{\sum_{1}^{H} Vn^2} = \sqrt{H} \times Vn.$$

Therefore, the S/N ratio of the shake signal output from the shake detecting unit 14' shown in Fig. 2 is $H^{(1/2)} \times Vs/Vn$. The S/N ratio of the shake signal output from the shake detecting unit 14' shown in Fig. 2 is $H^{(1/2)}$ times higher than that when one shake detecting sensor is provided as shown in Fig. 1. Therefore, as can be seen from Fig. 4, the ratio of the noise range with respect to the signal range is reduced. For example, when the shake detecting unit 14' shown in Fig. 2 includes two shake detecting sensors S1 and S2, the S/N ratio thereof is $2^{(1/2)}$ times higher than that when one shake detecting sensor is provided. As the number H of shake detecting sensors in the shake detecting unit 14' shown in Fig. 2 is increased, the S/N ratio is improved.

As described above, the image blur correcting device according to this embodiment of the invention treats the shake signal obtained by adding the outputs of a plurality of shake detecting sensors as the output of one shake detecting sensor. Therefore, it is possible to correct image blur on the basis of a shake signal with a high S/N ratio and prevent the problems, such as the above-mentioned 'fluctuation phenomenon'. In addition, it is possible to manufacture an inexpensive sensor with a high S/N ratio using an inexpensive sensor with a low S/N ratio.

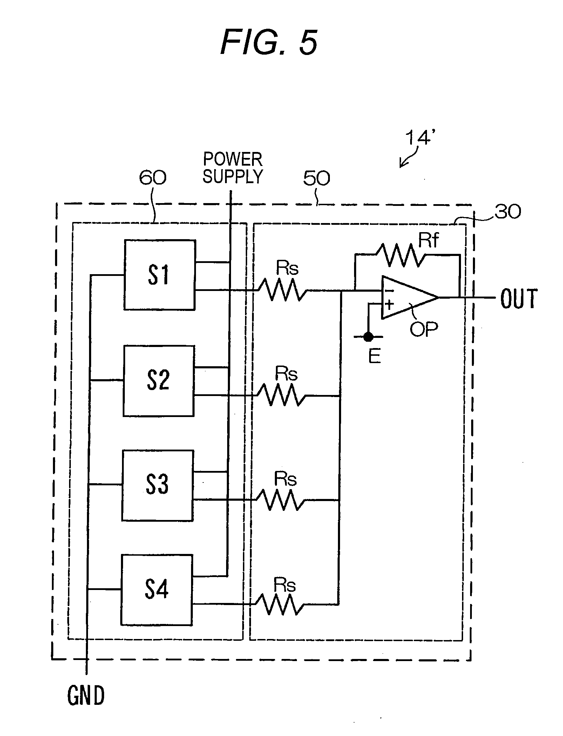

Fig. 5 is a diagram illustrating an example of the internal circuit structure of the shake detecting unit 14' shown in Fig. 2, and shows a case in which one shake detecting unit 14' includes four shake detecting sensors S1, S2, S3, and S4.

As shown in Fig. 5, the adder circuit 30 shown in Fig. 2 that adds the outputs of the shake detecting sensors S1, S2, S3, and S4 includes an operational amplifier OP, a feedback resistor Rf, and resistors Rs, Rs, Rs, and Rs. The resistors Rs, Rs, Rs, and Rs are connected between the output terminals of the shake detecting sensors S1 to S4 from which the signals to be added are output and an inverting input terminal (negative terminal) of the operational amplifier OP. The feedback resistor Rf is connected between the inverting input terminal and an output terminal of the operational amplifier OP. A predetermined reference voltage E is applied to a non-inverting input terminal (positive terminal) of the operational amplifier OP.

Each of the shake detecting sensors S1, S2, S3, and S4 includes a power supply terminal and a ground terminal for operation, and the power supply terminals are connected to a power supply and the ground. The output terminals of the detecting sensors S1, S2, S3, and S4 from which the shake signals are output are connected to the corresponding resistors Rs, Rs, Rs, and Rs, as described above.

According to the above-mentioned structure, a shake signal with the following voltage Vo is output from the output terminal of the operational amplifier OP that is connected to the input terminal of the A/D converter 16 shown in Fig. 2. First, it is assumed that the shake signals output from the shake detecting sensors S1, S2, S3, and S4 have voltages V1, V2, V3, and V4. In addition, it is assumed that the reference voltage applied to the non-inverting input terminal of the operational amplifier OP is E and the resistance values of the feedback resistor Rf and each of the resistors Rs are Rf and Rs, which are the same reference symbols as those of the feedback resistor and each resistor.

In this case, since currents (V1-E)/Rs, (V2-E)/Rs, (V3-E)/Rs, and (V4-E)/Rs flow through the resistors Rs, Rs, Rs, and Rs, the sum {(V1-E)+(V2-E)+(V3-E)+(V4-E)}/Rs of the currents flows through the feedback resistor Rf. Therefore, the voltage Vo of the shake signal output from the output terminal of the operational amplifier OP is represented by the following Expression 3:

[Expression 3]

$$Vo = E-\{(V1-E)+(V2-E)+(V3-E)+(V4-E)\}\cdot Rf/Rs = (1-4\cdot Rf/Rs)\cdot E-(V1+V2+V3+V4)\cdot Rf/Rs = A-(V1+V2+V3+V4)\cdot B$$

where A and B are integers.

That is, a shake signal corresponding to a voltage obtained by adding the voltages V1, V2, V3, and V4 of the shake signals is output as the output signal of the shake detecting unit 14'.

The shake detecting unit 14' shown in Fig. 5 adds the outputs of the four shake detecting sensors S1, S2, S3, and S4. The output terminals of the shake detecting sensors may be connected to the inverting input terminal of the operational amplifier OP through the resistors Rs to form one shake detecting sensor that outputs a shake signal obtained by adding the outputs of an arbitrary number of shake detecting sensors.

In addition, a plurality of shake detecting sensors S1, S2, ..., SH and the adder circuit 30 may be incorporated into one package to manufacture one shake detecting unit 14'. That is, in Fig. 5, a circuit (for example, the shake detecting sensors S1, S2, S3, and S4 and the adder circuit 30) surrounded by a dotted line 50 may be incorporated into one package, and necessary terminals (a power supply terminal, a ground terminal, and an output terminal) may be provided outside the package. In this way, it is possible to manufacture a shake detecting sensor that looks like one sensor outwardly. In addition, as represented by a dotted line 60 in Fig. 5, only the shake detecting sensors S1, S2, S3, and S4 may be incorporated into one package (which is the same as that when the number of the shake detecting sensors is other than 4), and the adder circuit 30 may be provided as an external circuit thereof.

In the above-described embodiment, a gyro sensor is given as an example of the shake detecting sensor. However, the invention can be applied to any sensors capable of detecting a shake, in addition to a gyro sensor.

The shake detecting unit 14' according to the above-described embodiment is not limited to the image blur correcting device, but it may be applied to other devices.

**Claims**

1. A shake detecting sensor comprising:

   a plurality of shake detecting sensors that detects a shake; and

an adder circuit that adds shake signals output from the plurality of shake detecting sensors,

wherein a signal added by the adder circuit is output as a shake signal output from one sensor.

2.  The shake detecting sensor according to claim 1,
    wherein the plurality of shake detecting sensors, or the plurality of shake detecting sensors and the adder circuit
    are incorporated into one package.

3.  The shake detecting sensor according to claim 1 or 2,
    wherein each of the plurality of shake detecting sensors is a gyro sensor.

4.  An image blur correcting device comprising:

    a shake detecting unit that outputs a shake signal corresponding to a shake which occurs in an optical system;
    an image displacement unit that displaces an image formed by the optical system on an imaging surface; and
    an image blur correcting unit that removes image blur caused by the shake occurring in the optical system using
    the image displacement unit, based on the shake signal,

    wherein the shake detecting unit includes:

    a plurality of shake detecting sensors that detects the shake; and
    an adder circuit that adds shake signals output from the plurality of shake detecting sensors, and
    a signal added by the adder circuit is output as a shake signal output from one sensor.

5.  The image blur correcting device according to claim 4,
    wherein the plurality of shake detecting sensors, or the plurality of shake detecting sensors and the adder circuit
    are incorporated into one package.

6.  The image blur correcting device according to claim 4 or 5, wherein each of the plurality of shake detecting sensors
    is a gyro sensor.

*FIG. 1*

EP 2 221 656 A1

## FIG. 2

SHAKE DETECTING SENSOR — S1

SHAKE DETECTING SENSOR — S2

SHAKE DETECTING SENSOR — S3

14'

30

A/D CONVERTER — 16

CPU — 18

D/A CONVERTER — 20

DRIVING CIRCUIT — 22

M — 12

10

EP 2 221 656 A1

8

## FIG. 3

SIGNAL RANGE $\;\downharpoonleft$ Vs

$\;\downarrow$ Vn

NOISE RANGE

t

## FIG. 4

SIGNAL RANGE $\;\downharpoonleft$ Vs'

$\;\downarrow$ Vn'

NOISE RANGE

t

# FIG. 5

**EUROPEAN SEARCH REPORT**

Application Number

EP 10 15 0250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/125213 A1 (KAWAHARA HIDEO [JP]) 1 July 2004 (2004-07-01) * paragraphs [0006] - [0019], [0 83], [0 92]; figures 1, 6, 7 * ----- | 1-6 | INV. G02B27/64 H04N5/232 |
| X | US 2005/212917 A1 (KAKIUCHI SHINICHI [JP]) 29 September 2005 (2005-09-29) * abstract; figure 1 * ----- | 1-6 | |
| X | US 2006/072019 A1 (STAVELY DONALD J [US] ET AL) 6 April 2006 (2006-04-06) * abstract; figures 1-6 * ----- | 1-6 | |
| X | JP 2006 098533 A (HITACHI METALS LTD) 13 April 2006 (2006-04-13) * abstract; figures 1-4 * ----- | 1-6 | |
| | | | TECHNICAL FIELDS SEARCHED (IPC) G02B H04N |

The present search report has been drawn up for all claims

| Place of search | Date of completion of the search | Examiner |
|---|---|---|
| Munich | 6 May 2010 | Trimeche, Mejdi |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 15 0250

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2010

| Patent document cited in search report | | Publication date | Patent family member(s) | | Publication date |
|---|---|---|---|---|---|
| US 2004125213 | A1 | 01-07-2004 | JP<br>JP | 4307056 B2<br>2004194157 A | 05-08-2009<br>08-07-2004 |
| US 2005212917 | A1 | 29-09-2005 | NONE | | |
| US 2006072019 | A1 | 06-04-2006 | JP | 2006099109 A | 13-04-2006 |
| JP 2006098533 | A | 13-04-2006 | NONE | | |

EPO FORM P0459

For more details about this annex : see Official Journal of the European Patent Office, No. 12/82

**EP 2 221 656 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001142103 A
- US 7339612 B
- JP 2003107554 A